# EUROPEAN PATENT SPECIFICATION

(11) **EP 3 040 616 B1**
(45) Date of publication and mention of the grant of the patent: **18.09.2019**
(21) Application number: 15201536.8
(22) Date of filing: 21.12.2015
(51) Int. Cl.: F23R 3/00

(54) **COMBUSTOR WALL WITH METALLIC COATING ON COLD SIDE**
BRENNKAMMERWAND MIT METALLISCHER BESCHICHTUNG AUF KALTER SEITE
PAROI DE CHAMBRE DE COMBUSTION AVEC REVÊTEMENT MÉTALLIQUE SUR LE CÔTÉ FROID

(30) Priority: 23.12.2014 US 201462096128 P
(43) Date of publication of application: 06.07.2016
(73) Proprietor: United Technologies Corporation, Farmington, CT 06032 (US)
(72) Inventor: BURD, Steven W., Cheshire, CT Connecticut 06410-0312 (US); TU, John S., West Hartford, CT Connecticut 06107 (US)
(74) Representative: Dehns

(56) References cited:
- US-A1- 2002 108 375
- US-A1- 2004 131 877
- US-A1- 2004 166 355
- US-A1- 2012 099 978

## Description

### BACKGROUND

A gas turbine engine typically includes a fan section, a compressor section, a combustor and a turbine section. Air entering the compressor section is compressed and delivered into the combustor where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The combustor is generally subject to high thermal loads for prolonged periods of time. The walls of the combustor may be cooled to alleviate the thermal stresses. Example cooling arrangements can include one or more walls that have holes for impingement or films cooling. Additionally, a thermal carrier coating may be disposed on the hot side of the walls to further resist thermal loads. US 2002/108375 A1 describes a method and apparatus for enhancing heat transfer in a combustor liner for a gas turbine. US 2004/131877 A1 describes an article having turbulation and a method of providing turbulation on an article. US 2004/166355 A1 describes a coating and coating process incorporating raised surface features for an air-cooled surface. US 2012/099978 A1 describes a turbine component having an easily removable protective layer.

### SUMMARY

A combustor according to an example of the present invention includes a combustion chamber, and a combustor wall at least partially bounding the combustion chamber. The combustor wall includes a first side facing the combustion chamber and a second side facing away from the combustion chamber. The second side includes an array of geometric surface features for thermal transfer. A metallic coating is disposed on at least a portion of the second side of the combustor wall. The combustor wall includes a substrate and the geometric surface features are either pins that extend outwards from the substrate or dimples that extend into the substrate.

In a further embodiment of any of the foregoing embodiments, the combustor wall includes an array of through-holes.

In a further embodiment of any of the foregoing embodiments, the metallic coating is continuous and fully covers one or more of the geometric surface features.

In a further embodiment of any of the foregoing embodiments, the metallic coating partially covers one or more of the geometric surface features.

In a further embodiment of any of the foregoing embodiments, the metallic coating has a first coating surface that is in contact with the second side of the combustor wall and a second coating surface that is a free surface.

In a further embodiment of any of the foregoing embodiments, the combustor wall is formed of a nickel-based alloy and the metallic coating is MCrAlY, where the M includes at least one of nickel, cobalt and iron, Cr is chromium, Al is aluminum, and Y is yttrium.

A further embodiment of any of the foregoing embodiments includes a ceramic thermal barrier coating disposed on the first side.

A further embodiment of any of the foregoing embodiments includes a bond coat between the ceramic thermal barrier coating and the first side.

In a further embodiment of any of the foregoing embodiments, the metallic coating has a thickness of 0.005 - 0.01 inches (127 - 254 micrometers).

In a further embodiment of any of the foregoing embodiments, the geometric surface features are surface protrusions.

In a further embodiment of any of the foregoing embodiments, the combustor wall includes an array of through-holes, the metallic coating at least partially covers one or more of the geometric surface features and has a first coating surface that is in contact with the second side of the combustor wall and a second coating surface that is a free surface, the combustor wall is formed of a nickel-based alloy and the metallic coating is MCrAlY, where the M includes at least one of nickel, cobalt and iron, Cr is chromium, Al is aluminum, and Y is yttrium, and there is a ceramic thermal barrier coating disposed on the first side of the combustor wall.

In a further embodiment of any of the foregoing embodiments, the combustor wall includes an array of through-holes, the metallic coating at least partially covers one or more of the geometric surface features and has a first coating surface that is in contact with the second side of the combustor wall and a second coating surface that is a free surface, the combustor wall is formed of a nickel-based alloy, and the metallic coating is MCrAlY, where the M includes at least one of nickel, cobalt and iron, Cr is chromium, Al is aluminum, and Y is yttrium.

A method for use with a combustor according to an example of the present invention includes a combustor that includes a combustion chamber and a combustor wall at least partially bounding the combustion chamber. The combustor wall includes a first side facing the combustion chamber and a second side facing away from the combustion chamber. The second side includes an array of geometric surface features for thermal transfer, and resists complete burn-through of the combustor wall using a metallic coating disposed on at least a portion of the second side of the combustor wall. The metallic coating is more resistant to oxidation than at least one material that forms the combustor wall. The combustor wall includes a substrate and the geometric surface features are either pins that extend outwards from the substrate or dimples that extend into the substrate.

In a further embodiment of any of the foregoing embodiments, the combustor wall includes an array of through-holes, the metallic coating at least partially covers one or more of the geometric surface features and has a first coating surface that is in contact with the second side of the combustor wall and the second coating surface that is a free surface, the combustor wall is formed of a nickel-based alloy and the metallic coating is MCrAlY, where the M includes at least one of nickel, cobalt and iron, Cr is chromium, Al is aluminum, and Y is yttrium, and there is a ceramic thermal barrier coating disposed on the first side of the combustor wall.

### BRIEF DESCRIPTION OF THE DRAWINGS

The various features and advantages of the present invention will become apparent to those skilled in the art from the following detailed description. The drawings that accompany the detailed description can be briefly described as follows.
Figure 1 illustrates an example gas turbine engine.
Figure 2 illustrates an example combustor wall of a combustor of the gas turbine engine of Figure 1.
Figure 3 illustrates a representative cross-section through the combustor wall of Figure 2.
Figure 4 illustrates a representative cross-section of another example combustor wall.
Figure 5 illustrates an example of a metallic coating of a combustor wall resisting complete burn-through of the liner panel.

### DETAILED DESCRIPTION

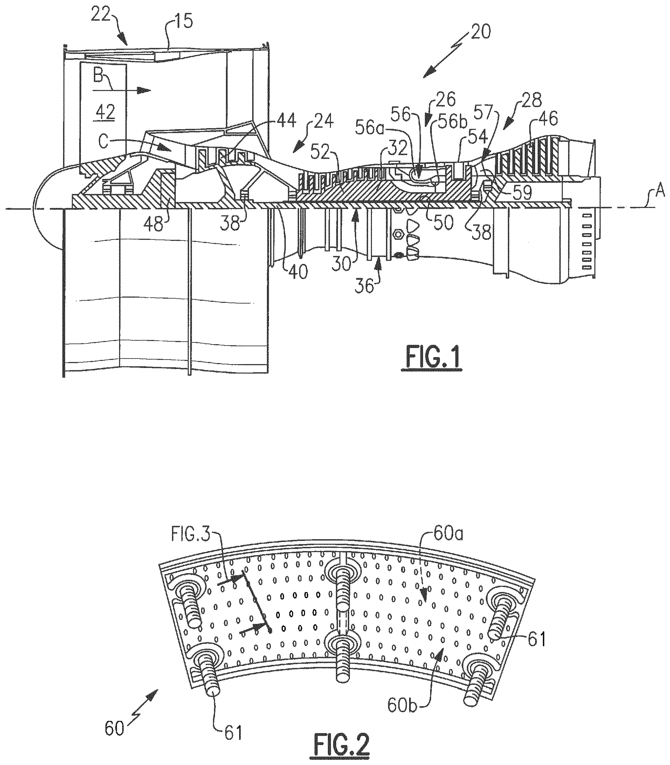

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engine designs can include an augmentor section (not shown) among other systems or features.

The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, the examples herein are not limited to use with two-spool turbofans and may be applied to other types of turbomachinery, including direct drive engine architectures, three-spool engine architectures, and ground-based turbines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48, to drive the fan 42 at a lower speed than the low speed spool 30.

The high speed spool 32 includes an outer shaft 50 that interconnects a second (or high) pressure compressor 52 and a second (or high) pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports the bearing systems 38 in the turbine section 28. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines, including direct drive turbofans.

A significant amount of thrust is provided by the bypass flow B due to the high bypass ratio. The fan section 22 of the engine 20 is designed for a particular flight condition -- typically cruise at about 0.8 Mach and about 10668 m (35,000 ft). The flight condition of 0.8 Mach and 10668 m (35,000 ft), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 350 m/s (1150 ft/ second).

In a further example, the fan 42 includes less than about 26 fan blades. In another non-limiting embodiment, the fan 42 includes less than about 20 fan blades. Moreover, in one further embodiment the low pressure turbine 46 includes no more than about 6 turbine rotors schematically indicated at 46a. In a further non-limiting example the low pressure turbine 46 includes about 3 turbine rotors. A ratio between the number of blades of the fan 42 and the number of low pressure turbine rotors 46a is between about 3.3 and about 8.6. The example low pressure turbine 46 provides the driving power to rotate the fan section 22 and therefore the relationship between the number of turbine rotors 46a in the low pressure turbine 46 and the number of blades in the fan section 22 discloses an example gas turbine engine 20 with increased power transfer efficiency.

Turning again to the combustor 56, the combustor 56 includes an interior combustion chamber 56a and a surrounding structure 56b. For example, the combustor 56 can be an annular-type combustor or a can-type combustor, but is not limited to such designs.

Figure 2 illustrates a combustor wall 60 of the structure 56b of the combustor 56. In this example, the combustor wall 60 is a segment or panel of the structure 56b, where multiple similar segments or panels can be used to define the combustion chamber 56a. Alternatively, rather than a panel, the combustor wall 60 can be a single wall that defines the combustion chamber 56a. The structure 56b can be a single-wall arrangement or a multi-wall arrangement. One example multi-wall arrangement is a twin-wall arrangement that has a panel wall and a shell (not shown). Whether implemented as a panel, a single wall, or a variation thereof, the combustor wall 60 at least partially bounds the combustion chamber 56a. In this regard, the combustor wall 60 includes a first side 60a that faces toward the combustion chamber 56a and a second, opposed side 60b that faces away from the combustion chamber 56a. Thus, the first side 60a of the combustor wall 60 would be exposed to hot combustion gases during operation of the engine 20. In this example, the combustor wall 60 also includes attachment members 61, such as studs or threaded ends, for securing the combustor wall 60 in the combustor 56.

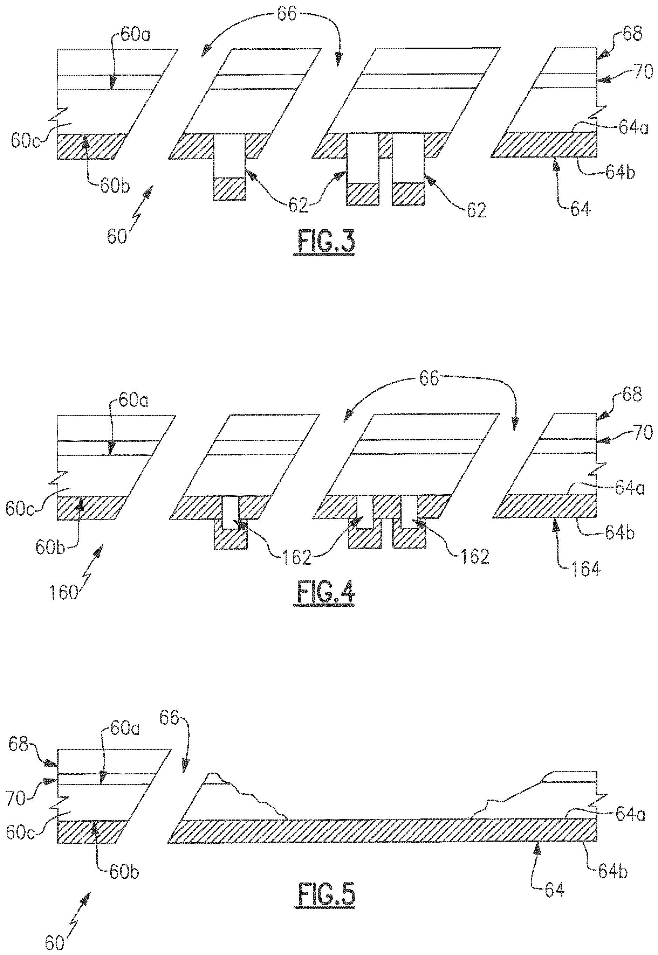

Figure 3 illustrates a representative cross-section through the combustor wall 60. The second side 60b of the combustor wall 60 includes an array of geometric surface features 62 that facilitate thermal transfer from the combustor wall 60. That is, the geometric surface features 62 increase the surface area of the second side 60b to facilitate thermal transfer. In this regard, the geometric surface features 62 can be integrally formed on the surface of a substrate 60c of the combustor wall 60 such that the substrate 60c and geometric surface features 62 are a single, monolithic piece. Alternatively, the geometric surface features 62 can be bonded to the substrate 60c.

In this example, the surface features 62 are pins that extend outwards from the substrate 60c. In one example, the pins are geometric protrusions. The pins can be substantially uniform cross-section pins that are polygonal, circular, or oval, for example. In additional examples, the pins can be tapered pins that have the geometry of a frustum. Other embodiments can include conical convex cones, concave cones, or hemispheres. The pins are "positive" features that extend outwards from the substrate 60c. In additional examples, the surface features 62 are dimples. Dimples are "negative" features that extend into the substrate 60c, such as but not limited to negative features of any of the above positive features. Other examples can include a variety of pins and dimples. The pins and dimples can also have a substantially uniform height/depth, or the heights/depths can be varied.

A metallic coating 64 is disposed on at least a portion of the second side 60b of the combustor wall 60. As will be discussed in further detail, the metallic coating 64 facilitates resisting complete burn-through of the combustor wall 60 during operation of the combustor 56, while also permitting thermal transfer from the combustor wall 60.

The metallic coating 64 extends between first and second opposed coating surfaces 64a/64b. In this example, the first coating surface 64a is in contact with the second side 60b of the combustor wall 60 and the second coating surface 64b is a free surface. Thus, the metallic coating 64 can serve to directly transfer heat from the substrate 60c and reject the heat at the free surface of the second coating surface 64b.

The metallic coating 64 has a composition that is oxidation resistant relative to at least one material that forms the underlying substrate 60c. For instance, the substrate 60c can be formed of a superalloy material, such as a nickel- or cobalt-based alloy. The metallic coating 64 can include at least one alloy of nickel, cobalt, and iron in a composition that has greater oxidation resistance than the superalloy of the substrate 60c. In further examples, the metallic coating 64 also includes one or more of chromium, aluminum, and yttrium. In one further example, the metallic coating is MCrAlY, where the M includes at least one of nickel, cobalt, and iron, Cr is chromium, Al is aluminum, and Y is yttrium. The MCrAlY can predominantly be the nickel, cobalt, and/or iron, while the remaining elements can be varied in amount in accordance with a selected deposition process and/or desired oxidation properties.

One measure of oxidation resistance is the ability of an alloy to form a passive oxide scale under engine conditions, simulated engine conditions, or standardized test conditions. A passive oxide scale serves as an oxygen barrier and thus protects the underlying material from oxidation. In a further example, under a common condition, the metallic coating 64 forms an oxide scale and the superalloy material of the substrate 60c either does not substantially form an oxide scale or forms a scale that is less desirable with respect to oxidation resistance for one or more of thickness, porosity, composition, and crystallographic morphology.

Optionally, the combustor wall 60 also includes through-holes 66 through which cooling fluid can be provided to facilitate maintaining the combustor wall 60 at a desired temperature. For example, the through-holes 66 are sloped relative to the plane of the combustor wall 60, for emitting a film cooling stream at the first side 60a of the combustor wall 60. Additionally, a thermal barrier coating 68 can be disposed on the first side 60a of the combustor wall 60. As an example, the thermal barrier coating 68 is formed of a ceramic material, such as an oxide material. The thermal barrier coating 68 can be a coating system that also includes a bond coat 70 to facilitate adherence of the ceramic topcoat. As an example, the bond coat 70 can also be MCrAlY, in the same or different composition as the metallic coating 64.

Figure 4 illustrates a representative portion of another example combustor wall 160. In this disclosure, like reference numerals designate like elements where appropriate and reference numerals with the addition of one-hundred or multiples thereof designate modified elements that are understood to incorporate the same features and benefits of the corresponding elements. In this example, the geometric surface features 162 are smaller than a desired design size, but the metallic coating 64 fully covers one or more of the geometric surface features 162 such that the surface features 162 and coating 64 together achieve the desired design size. In this regard, the size of the geometric surface features 162 and the thickness of the metallic coating 164 can be selected in correspondence with each other such that the resulting size of the geometric surface features 162, with the metallic coating 164 thereon, is approximately the same as the size of the geometric surface features 62 of Figure 3.

Figure 5 illustrates a representative portion of the combustor wall 60 after a period of use in the combustor 56 or test rig that can simulate operating conditions. Due to exposure of hot combustion gases, portions of the thermal barrier coating 68 can spall, exposing the underlying substrate 60c. The now-exposed substrate 60c may also oxidize and spall. This type of spallation may otherwise result in a burn-through hole in the structure 56b of the combustor 56 and loss or liberation of pieces of the structure 56b, which can impact downstream components in the engine 20. However, the presence of the metallic coating 64/164, which is oxidation resistant, serves to resist complete burn-through of the combustor wall 60. That is, even if portions of the thermal barrier coating 68 and substrate 60c oxidize and spall, the metallic coating 64/164 is oxidation resistant and thus resists burn-through and liberation of additional pieces of the combustor wall 60. In this regard, the metallic coating 64/164 can also serve as a structural piece and thus may be deposited in a thickness that is suitable for structural support of the substrate 60c and thermal barrier coating 68. In one example, the through-thickness of the metallic coating 64 or 164 is approximately 0.005-0.01 inches (127-254 micrometers).

Additionally, since the metallic coating 64/164 is metallic, the thermal conductivity at the second side 60b of the combustor wall 60 is not debited by the presence of the metallic coating 64/164. That it, there are no ceramic coatings on or adjacent to the metallic coating 64/164, which would otherwise reduce thermal conductivity at the second side 60b. It is to be understood, however, that other metallic coatings may be used in combination with the metallic coating 64, such as but not limited to, corrosion resistant coatings and metallic diffusion coatings. Furthermore, this disclosure is not limited to originally fabricated parts. In this regard, the metallic coating 64/164 can be used on an originally fabricated combustion wall or can be added to a pre-existing combustor wall after field use in an engine as a repair or restoration to enhance durability.

In the illustrated example in Figure 3, the metallic coating 64 is discontinuous and only partially covers one or more of the geometric surface features 62. In a further example, the portions covered can be portions that are subject to greater oxidation relative to other portions of the panel 60. In this regard, the sides of the geometric surface features 62 may have little or no coating 64. However, the liner panel 60 may be less prone to burn-through at the surface features 62, and the metallic coating 64 thus need not be present there or may be present in a lesser amount than in between the surface features 62. Masking or similar techniques can be used to exclude selected portions from deposition of the metallic coating 64.

Although a combination of features is shown in the illustrated examples, not all of them need to be combined to realize the benefits of various embodiments of this invention. In other words, a system designed according to an embodiment of this invention will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A combustor (56) comprising:
a combustion chamber (56a);
a combustor wall (60) at least partially bounding the combustion chamber, the combustor wall including a first side (60a) facing the combustion chamber (56a) and a second side (60 b) facing away from the combustion chamber, the second side including an array of geometric surface features (62) for thermal transfer; and
a metallic coating (64) disposed on at least a portion of the second side of the combustor wall, and wherein the combustor wall (60) includes a substrate and the geometric surface features are either pins that extend outwards from the substrate or dimples that extend into the substrate.

2. The combustor or combustor article as recited in claim 1, wherein the combustor wall includes an array of through-holes (66).

3. The combustor or combustor article as recited in any of claims 1 to 2, wherein the metallic coating (64) is continuous and fully covers one or more of the geometric surface features.

4. The combustor or combustor article as recited in any of claims 1 to 3, wherein the metallic coating (64) partially covers one or more of the geometric surface features.

5. The combustor or combustor article as recited in any preceding claim, wherein the metallic coating has a first coating surface that is in contact with the second side (60 b) of the combustor wall (60) and a second coating surface (64 b) that is a free surface.

6. The combustor or combustor article as recited in any preceding claim, wherein the combustor wall (60) is formed of a nickel-based alloy and the metallic coating is MCrAlY, where the M includes at least one of nickel, cobalt and iron, Cr is chromium, Al is aluminum, and Y is yttrium.

7. The combustor or combustor article as recited in any preceding claim, further comprising a ceramic thermal barrier coating (68) disposed on the first side.

8. The combustor or combustor article as recited in claim 7, further comprising a bond coat between the ceramic thermal barrier coating and the first side.

9. The combustor or combustor article as recited in any preceding claim, wherein the metallic coating has a thickness of 0.005 - 0.01 inches (127 - 254 micrometers).

10. The combustor or combustor article as recited in any preceding claim, wherein the geometric surface features (62) are surface protrusions.

11. The combustor as recited in claim 1, wherein the combustor wall includes an array of through-holes, the metallic coating (64) at least partially covers one or more of the geometric surface features (62) and has a first coating surface that is in contact with the second side (60 b) of the combustor wall and a second coating surface (64 b) that is a free surface, the combustor wall (60) is formed of a nickel-based alloy and the metallic coating is MCrAlY, where the M includes at least one of nickel, cobalt and iron, Cr is chromium, Al is aluminum, and Y is yttrium, and further comprising a ceramic thermal barrier coating (68) disposed on the first side of the combustor wall.

12. The combustor article as recited in claim 1, wherein the combustor wall (60) includes an array of through-holes (66), the metallic coating (64) at least partially covers one or more of the geometric surface features (62) and has a first coating surface that is in contact with the second side (60 b) of the combustor wall and a second coating surface (64 b) that is a free surface, and the combustor wall (60) is formed of a nickel-based alloy and the metallic coating is MCrAlY, where the M includes at least one of nickel, cobalt and iron, Cr is chromium, Al is aluminum, and Y is yttrium.

13. A method for use with a combustor, the method comprising:
a combustor (56) that includes a combustion chamber (56a) and a combustor wall (60) at least partially bounding the combustion chamber (56a), the combustor wall (60) including a first side (60a) facing the combustion chamber (56a) and a second side (60 b) facing away from the combustion chamber (56a), the second side including an array of geometric surface features for thermal transfer, and
resisting complete burn-through of the combustor wall using a metallic coating (64) disposed on at least a portion of the second side of the combustor wall, the metallic coating being more resistant to oxidation than at least one material that forms the combustor wall, and wherein the combustor wall (60) includes a substrate and the geometric surface features are either pins that extend outwards from the substrate or dimples that extend into the substrate.

14. The method as recited in claim 13, wherein the combustor wall (60) includes an array of through-holes (66), the metallic coating (64) at least partially covers one or more of the geometric surface features (62) and has a first coating surface that is in contact with the second side (60 b) of the combustor wall and the second coating surface (64 b) that is a free surface, the combustor wall (60) is formed of a nickel-based alloy and the metallic coating (64) is MCrAlY, where the M includes at least one of nickel, cobalt and iron, Cr is chromium, Al is aluminum, and Y is yttrium, and further comprising a ceramic thermal barrier coating (68) disposed on the first side of the combustor wall.

## Patentansprüche

1. Brennkammer (56), umfassend:
einen Verbrennungsraum (56a);
eine Brennkammerwand (60), die zumindest teilweise an den Verbrennungsraum angrenzt, wobei die Brennkammerwand eine erste Seite (60a) beinhaltet, die dem Verbrennungsraum (56a) zugewandt ist, und eine zweite Seite (60 b), die von dem Verbrennungsraum abgewandt ist, wobei die zweite Seite eine Reihe von geometrischen Oberflächenmerkmalen (62) zur Wärmeübertragung beinhaltet; und
eine metallische Beschichtung (64), die auf zumindest einem Abschnitt der zweiten Seite der Brennkammerwand angeordnet ist, und wobei die Brennkammerwand (60) ein Substrat beinhaltet und die geometrischen Oberflächenmerkmale entweder Stifte sind, die sich von dem Substrat nach außen erstrecken oder Vertiefungen, die sich in das Substrat erstrecken.

2. Brennkammer oder Brennkammerartikel nach Anspruch 1, wobei die Brennkammerwand eine Reihe von Durchgangslöchern (66) beinhaltet.

3. Brennkammer oder Brennkammerartikel nach Anspruch 1 bis 2, wobei die metallische Beschichtung (64) durchgängig ist und eines oder mehrere der geometrischen Oberflächenmerkmale vollständig bedeckt.

4. Brennkammer oder Brennkammerartikel nach Anspruch 1 bis 3, wobei die metallische Beschichtung (64) eines oder mehrere der geometrischen Oberflächenmerkmale teilweise bedeckt.

5. Brennkammer oder Brennkammerartikel nach einem der vorangehenden Ansprüche, wobei die metallische Beschichtung eine erste Beschichtungsfläche aufweist, die in Kontakt mit der zweiten Seite (60 b) der Brennkammerwand (60) ist, und eine zweite Beschichtungsfläche (64 b), die eine freie Fläche ist.

6. Brennkammer oder Brennkammerartikel nach einem der vorangehenden Ansprüche, wobei die Brennkammerwand (60) aus einer nickelbasierten Legierung gebildet ist und die metallische Beschichtung MCrAlY ist, wobei das M zumindest eines von Nickel, Kobalt und Eisen beinhaltet, Cr Chrom ist, Al Aluminium ist und Y Yttrium ist.

7. Brennkammer oder Brennkammerartikel nach einem der vorangehenden Ansprüche, ferner umfassend eine keramische Wärmedämmbeschichtung (68), die auf der ersten Seite angeordnet ist.

8. Brennkammer oder Brennkammerartikel nach Anspruch 7, ferner umfassend eine Bindungsschicht zwischen der keramischen Wärmedämmbeschichtung und der ersten Seite.

9. Brennkammer oder Brennkammerartikel nach einem der vorangehenden Ansprüche, wobei die metallische Beschichtung eine Dicke von 0,005-0,01 Zoll (127-254 Mikrometer) aufweist.

10. Brennkammer oder Brennkammerartikel nach einem der vorangehenden Ansprüche, wobei die geometrischen Oberflächenmerkmale (62) Oberflächenvorsprünge sind.

11. Brennkammer nach Anspruch 1, wobei die Brennkammerwand eine Reihe von Durchgangslöchern beinhaltet, die metallische Beschichtung (64) zumindest teilweise eines oder mehrere der geometrischen Oberflächenmerkmale (62) bedeckt und eine erste Beschichtungsfläche aufweist, die in Kontakt mit der zweiten Seite (60 b) der Brennkammerwand ist, und eine zweite Beschichtungsfläche (64 b), die eine freie Fläche ist, wobei die Brennkammerwand (60) aus einer nickelbasierten Legierung gebildet ist und die metallische Beschichtung MCrAlY ist, wobei das M zumindest eines von Nickel, Kobalt und Eisen beinhaltet, Cr Chrom ist, Al Aluminium ist und Y Yttrium ist, und ferner umfassend eine keramische Wärmedämmbeschichtung (68), die auf der ersten Seite der Brennkammerwand angeordnet ist.

12. Brennkammerartikel nach Anspruch 1, wobei die Brennkammerwand (60) eine Reihe von Durchgangslöchern (66) beinhaltet, die metallische Beschichtung (64) zumindest teilweise eines oder mehrere der geometrischen Oberflächenmerkmale (62) bedeckt und eine erste Beschichtungsfläche aufweist, die in Kontakt mit einer zweiten Seite (60 b) der Brennkammerwand ist, und eine zweite Beschichtungsfläche (64 b), die eine freie Fläche ist, und die Brennkammerwand (60) aus einer nickelbasierten Legierung gebildet ist und die metallische Beschichtung MCrAlY ist, wobei das M zumindest eines von Nickel, Kobalt und Eisen beinhaltet, Cr Chrom ist, Al Aluminium ist und Y Yttrium ist.

13. Verfahren zur Verwendung mit einer Brennkammer, das Verfahren umfassend:
eine Brennkammer (56), die einen Verbrennungsraum (56a) und eine Brennkammerwand (60) beinhaltet, die zumindest teilweise an den Verbrennungsraum (56a) angrenzt, wobei die Brennkammerwand (60) eine erste Seite (60a) beinhaltet, die dem Verbrennungsraum (56a) zugewandt ist, und eine zweite Seite (60 b), die von dem Verbrennungsraum (56a) abgewandt ist, und die zweite Seite eine Reihe von geometrischen Oberflächenmerkmalen zur Wärmeübertragung beinhaltet, und Widerstehen gegen vollständiges Durchbrennen der Brennkammerwand unter Verwendung einer metallischen Beschichtung (64), die an zumindest einem Abschnitt der zweiten Seite der Brennkammerwand angeordnet ist, wobei die metallische Beschichtung widerstandsfähiger gegenüber Oxidation ist als zumindest ein Material, das die Brennkammerwand bildet, und wobei die Brennkammerwand (60) ein Substrat beinhaltet und die geometrischen Oberflächenmerkmale entweder Stifte sind, die sich von dem Substrat nach außen erstrecken, oder Vertiefungen, die sich in das Substrat erstrecken.

14. Verfahren nach Anspruch 13,
wobei die Brennkammerwand (60) eine Reihe von Durchgangslöchern (66) beinhaltet, die metallische Beschichtung(64) zumindest teilweise eines oder mehrere der geometrischen Oberflächenmerkmale (62) bedeckt und eine erste Beschichtungsfläche aufweist, die in Kontakt mit der zweiten Seite (60 b) der Brennkammerwand ist, und die zweite Beschichtungsfläche (64 b), die eine freie Fläche ist, die Brennkammerwand (60) aus einer nickelbasierten Legierung gebildet ist und die metallische Beschichtung (64) MCrAlY ist, wobei das M zumindest eines von Nickel, Kobalt und Eisen beinhaltet, Cr Chrom ist, Al Aluminium ist und Y Yttrium ist, und ferner umfassend eine keramische Wärmedämmbeschichtung (68), die auf der ersten Seite der Brennkammerwand angeordnet ist.

## Revendications

1. Chambre de combustion (56) comprenant :
une chambre de combustion (56a) ;
une paroi de chambre de combustion (60) délimitant au moins partiellement la chambre de combustion, la paroi de chambre de combustion comportant un premier côté (60a) faisant face à la chambre de combustion (56a) et un second côté (60 b) opposé à la chambre de combustion, le second côté comportant un ensemble de caractéristiques de surface géométriques (62) pour le transfert thermique ; et
un revêtement métallique (64) disposé sur au moins une partie du second côté de la paroi de la chambre de combustion, et dans laquelle la paroi de la chambre de combustion (60) comporte un substrat et les caractéristiques de surface géométriques sont soit des broches qui s'étendent vers l'extérieur depuis le substrat, soit des alvéoles qui s'étendent dans le substrat.

2. Chambre de combustion ou article de chambre de combustion selon la revendication 1, dans laquelle la paroi de chambre de combustion comporte un ensemble de trous traversants (66).

3. Chambre de combustion ou article de chambre de combustion selon l'une quelconque des revendications 1 à 2, dans laquelle le revêtement métallique (64) est continu et recouvre entièrement une ou plusieurs des caractéristiques de surface géométriques.

4. Chambre de combustion ou article de chambre de combustion selon l'une quelconque des revendications 1 à 3, dans laquelle le revêtement métallique (64) recouvre partiellement une ou plusieurs des caractéristiques de surface géométriques.

5. Chambre de combustion ou article de chambre de combustion selon une quelconque revendication précédente, dans laquelle le revêtement métallique présente une première surface de revêtement qui est en contact avec le second côté (60 b) de la paroi de chambre de combustion (60) et une seconde surface de revêtement (64 b) qui est une surface libre.

6. Chambre de combustion ou article de chambre de combustion selon une quelconque revendication précédente, dans laquelle la paroi de chambre de combustion (60) est formée à partir d'un alliage à base de nickel et le revêtement métallique est MCrAlY, où M comporte au moins un élément parmi le nickel, le cobalt et le fer, Cr est le chrome, Al est l'aluminium et Y est l'yttrium.

7. Chambre de combustion ou article de chambre de combustion selon une quelconque revendication précédente, comprenant en outre un revêtement de barrière thermique céramique (68) disposé sur le premier côté.

8. Chambre de combustion ou article de chambre de combustion selon la revendication 7, comprenant en outre une couche de liaison entre le revêtement de barrière thermique céramique et le premier côté.

9. Chambre de combustion ou article de chambre de combustion selon une quelconque revendication précédente, dans laquelle le revêtement métallique présente une épaisseur de 0,005 à 0,01 pouce (127 à 254 micromètres).

10. Chambre de combustion ou article de chambre de combustion selon une quelconque revendication précédente, dans laquelle les caractéristiques de surface géométriques (62) sont des saillies de surface.

11. Chambre de combustion selon la revendication 1, dans laquelle la paroi de chambre de combustion comporte un ensemble de trous traversants, le revêtement métallique (64) recouvre au moins partiellement une ou plusieurs des caractéristiques de surface géométriques (62) et présente une première surface de revêtement qui est en contact avec le second côté (60 b) de la paroi de chambre de combustion et une seconde surface de revêtement (64 b) qui est une surface libre, la paroi de chambre de combustion (60) est formée à partir d'un alliage à base de nickel et le revêtement métallique est MCrAlY, où M comporte au moins un élément parmi le nickel, le cobalt et le fer, Cr est le chrome, Al est l'aluminium et Y est l'yttrium, et comprenant en outre un revêtement de barrière thermique céramique (68) disposé sur le premier côté de la paroi de chambre de combustion.

12. Article de chambre de combustion selon la revendication 1, dans lequel la paroi de chambre de combustion (60) comporte un ensemble de trous traversants (66), le revêtement métallique (64) recouvrant au moins partiellement une ou plusieurs des caractéristiques de surface géométriques (62) et présente une première surface de revêtement qui est en contact avec le second côté (60 b) de la paroi de chambre de combustion et une seconde surface de revêtement (64 b) qui est une surface libre, et la paroi de chambre de combustion (60) est formée à partir d'un alliage à base de nickel et le revêtement métallique est MCrAlY, où M comporte au moins un élément parmi le nickel, le cobalt et le fer, Cr est le chrome, Al est l'aluminium et Y est l'yttrium.

13. Procédé d'utilisation avec une chambre de combustion, le procédé comprenant :
une chambre de combustion (56) qui comporte une chambre de combustion (56a) et une paroi de chambre de combustion (60) délimitant au moins partiellement la chambre de combustion (56a), la paroi de chambre de combustion (60) comportant un premier côté (60a) faisant face à la chambre de combustion (56a) et un second côté (60 b) opposé à la chambre de combustion (56a), le second côté comportant un ensemble de caractéristiques de surface géométriques pour le transfert thermique, et
la résistance au perçage par brûlure complet de la paroi de la chambre de combustion en utilisant un revêtement métallique (64) disposé sur au moins une partie du second côté de la paroi de chambre de combustion, le revêtement métallique étant plus résistant à l'oxydation qu'au moins un matériau qui forme la paroi de chambre de combustion, et dans lequel la paroi de chambre de combustion (60) comporte un substrat et les caractéristiques de surface géométriques sont soit des broches qui s'étendent vers l'extérieur du substrat, soit des alvéoles qui s'étendent dans le substrat.

14. Procédé selon la revendication 13, dans lequel la paroi de chambre de combustion (60) comporte un ensemble de trous traversants (66), le revêtement métallique (64) recouvre au moins partiellement une ou plusieurs des caractéristiques de surface géométriques (62) et présente une première surface de revêtement qui est en contact avec le second côté (60 b) de la paroi de chambre de combustion et la seconde surface de revêtement (64 b) qui est une surface libre, la paroi de chambre de combustion (60) est formée à partir d'un alliage à base de nickel et le revêtement métallique (64) est MCrAlY, où M comporte au moins un élément parmi le nickel, le cobalt et le fer, Cr est le chrome, Al est l'aluminium et Y est l'yttrium, et comprenant en outre un revêtement de barrière thermique céramique (68) disposé sur le premier côté de la paroi de chambre de combustion.
